# EUROPÄISCHE PATENTSCHRIFT

(11) **EP 3 328 675 B1**
(45) Veröffentlichungstag und Bekanntmachung des Hinweises auf die Patenterteilung: **08.09.2021**
(21) Anmeldenummer: 16741232.9
(22) Anmeldetag: 09.07.2016
(51) Int. Cl.: B60K 26/02, B60W 50/16, G05G 1/44, G05G 5/03, B60W 50/08

(54) **VERFAHREN UND STEUERVORRICHTUNG ZUM STEUERN EINES AKTIVEN GASPEDALS**
METHOD AND CONTROL DEVICE FOR CONTROLLING AN ACTIVE ACCELERATOR
PROCÉDÉ ET DISPOSITIF POUR COMMANDER UNE PÉDALE D'ACCÉLÉRATEUR ACTIVE

(30) Priorität: 01.08.2015 DE 102015010047
(43) Veröffentlichungstag der Anmeldung: 06.06.2018
(73) Patentinhaber: Audi AG, 85045 Ingolstadt (DE)
(72) Erfinder: LEPCZYK, Daniel, 86529 Schrobenhausen (DE); DIETRICH, Maximilian, 81245 München (DE); MAKHORTOVA, Daria, 93356 Teugn (DE)
(86) Internationale Anmeldenummer: PCT/EP2016/001184
(87) Internationale Veröffentlichungsnummer: WO 2017/020987

(56) Entgegenhaltungen:
- DE-A1-102007 011 739
- DE-A1-102010 018 753
- DE-A1-102013 223 575
- US-A1- 2012 191 312

## Beschreibung

Die vorliegende Erfindung betrifft ein Verfahren zum Steuern einer Vorrichtung sowie eine Steuervorrichtung und ein Fahrzeug.

Beim Bedienen von Vorrichtungen, wie bspw. Fahrzeugen mit mehreren Zuständen, d. h. Betriebszuständen, kann einem jeweiligen Nutzer eine Änderung eines aktuellen Betriebszustands der Vorrichtung mittels einer Rückmeldung, wie bspw. einem geänderten Druckpunkt an einem Kraftsteller, wie bspw. einem Pedal, gegeben werden. So kann es bspw. bei Hybridfahrzeugen mit mehreren Antriebsaggregaten sinnvoll sein, dem jeweiligen Nutzer eine Rückmeldung über ein Zuschalten eines Verbrennungsaggregats zu einem elektrischen Antrieb bereitzustellen, um den Nutzer über das Zuschalten des Verbrennungsaggregats zu informieren.

In der deutschen Offenlegungsschrift DE 10 2014 051 29 A1 wird ein Verfahren zum Rückmelden eines geänderten Betriebszustand eines Fahrzeugs an einen Fahrer offenbart.

Ein Verfahren zum Anzeigen eines Wechsels eines Fahrantriebs ist in der deutschen Offenlegungsschrift DE 10 2012 108 589 A1 offenbart.

Die Druckschrift DE 11 2009 002 530 T5 offenbart das Bereitstellen einer Warnung an einen Fahrer eines Fahrzeugs für den Fall, dass das Fahrzeug in einen Grenzzustand gerät. Die Schriften DE 10 2007 011 739 A und DE 10 2010 018 753 A zeigen Pedale mit einem Kraftsteller.

Vor diesem Hintergrund wird ein Verfahren zum Steuern einer Vorrichtung vorgestellt, bei dem ein Steuerbefehl zum Steuern der Vorrichtung über einen von einem Nutzer betätigten Kraftsteller erzeugt wird, wobei ein Steuergerät der Vorrichtung mindestens einen Aktuator derart steuert, dass der mindestens eine Aktuator dem Nutzer an einem vorgegebenen Wegpunkt des Kraftstellers eine Rückmeldung über mindestens einen Zustand der Vorrichtung an dem Kraftsteller bereitstellt und wobei das Steuergerät den mindestens einen Aktuator weiterhin derart steuert, dass der mindestens eine Aktuator, bei einer Änderung des vorgegebenen Wegpunkts des Kraftstellers in einen in Auslenkungsrichtung des Kraftstellers vor dem vorgegebenen Wegpunkt liegenden geänderten Wegpunkt, den Kraftsteller an einen Sollwegpunkt verschiebt, der in Auslenkungsrichtung des Kraftstellers vor dem geänderten Wegpunkt liegt, so dass dem Nutzer bei einem Verschieben des Kraftstellers in Auslenkungsrichtung die Rückmeldung über den mindestens einen Zustand an dem geänderten Wegpunkt bereitgestellt wird, wenn der Kraftsteller auf seinem Weg in Auslenkungsrichtung den geänderten Wegpunkt erreicht.

Das vorgestellte Verfahren dient insbesondere zum Bereitstellen einer Rückmeldung eines geänderten Zustands, d. h. Betriebszustands, eines Fahrzeugs an einen Fahrer. Dabei ist vorgesehen, dass, für den Fall, dass die Rückmeldung an einem Wegpunkt eines Kraftstellers, wie bspw. einem Fahrpedal des Fahrzeugs, bereitzustellen ist, der bereits, bedingt durch eine Eingabe des Fahrers, von dem Kraftsteller überschritten wurde, der Kraftsteller ggf. zusammen mit einem Fuß des Fahrers hinter den Wegpunkt zum Bereitstellen der Rückmeldung verschoben wird, so dass die Rückmeldung dem Fahrer bei erneutem Überschreiten des Wegpunkts mit dem Kraftsteller bereitgestellt werden kann.

Insbesondere ist vorgesehen, dass der Kraftsteller zusammen mit dem Fuß des Fahrers bzw. Nutzers derart verschoben wird, dass der Fahrer bzw. Nutzer von einem Verschiebevorgang des Kraftstellers keine Kenntnis erlangt.

Selbstverständlich eignet sich das vorgestellte Verfahren für jede Art von Benutzerschnittstellen, die mehrere Zustände einer Vorrichtung kontrollieren. Entsprechend ist unter einem Kraftsteller im Kontext der vorliegenden Erfindung jede Vorrichtung zum Einstellen einer Kraft an einer Vorrichtung, insbesondere ein Pedal, wie bspw. ein Fahrpedal, zu verstehen.

Da eine an einen Nutzer einer Vorrichtung zu übermittelnde Rückmeldung in der Regel während eines Betriebs der Vorrichtung aufkommt, kann es vorkommen, dass ein Kraftsteller zur Kontrolle der Vorrichtung durch den Nutzer bereits in eine Stellung verfahren wurde, die hinter einem Wegpunkt liegt, an dem die zu übermittelnde Rückmeldung bereitzustellen ist. Um dem Nutzer dennoch die Rückmeldung zu übermitteln bzw. den Nutzer in eine Lage zu versetzen, in der die Rückmeldung ggf. erfolgen kann, ist erfindungsgemäß vorgesehen, dass der Kraftsteller von einem Aktuator, wie bspw. einem linearen Hubmagneten oder jeder weiteren technisch geeigneten Vorrichtung zum Verschieben eines Kraftstellers, von einem aktuellen Wegpunkt an einen geänderten Wegpunkt, d. h. einen Sollwegpunkt, verfahren wird, der vor dem Wegpunkt liegt, an dem die Rückmeldung bereitzustellen ist.

Dies bedeutet, dass der Kraftsteller entlang seiner Bewegungsbahn zum Kontrollieren der Vorrichtung von einem ersten Punkt A an einen zweiten Punkt B verschoben wird, wobei der zweite Punkt B vor dem Punkt A und vor einem Punkt liegt, an dem die Rückmeldung bereitzustellen ist. Entsprechend ist vorgesehen, dass der Kraftsteller beim Verschieben von Punkt A zu Punkt B mittels des Aktuators den Punkt, an dem die Rückmeldung bereitzustellen ist, entgegen einer Richtung, die für die Rückmeldung vorgesehen ist, passiert, so dass es dem Nutzer möglich wird, der Kraftsteller über den Punkt an dem die Rückmeldung vorgesehen ist, in der für die Rückmeldung vorgesehenen Richtung zu bewegen.

In einem verdeutlichenden Beispiel steuert ein Fahrer eines Hybridfahrzeugs mit einem elektrischen Antrieb und einem Verbrennungsmotor das Hybridfahrzeug unter Verwendung eines Fahrpedals. Ein Steuergerät des Hybridfahrzeugs ist dazu konfiguriert, dem Fahrer beim Überschreiten des Fahrpedals über einen ersten Wegpunkt entlang einer Bewegungsbahn des Fahrpedals, der zu einem Zuschalten des Verbrennungsmotors führt, eine Rückmeldung in Form eines Druckpunkts bereitzustellen, der durch einen Aktuator vermittelt wird. Fällt nun ein Ladezustand einer Batterie des Hybridfahrzeugs unter einen vorgegebenen Wert, so ist vorgesehen, den Verbrennungsmotor bereits früher, d. h. bei einer geringeren Leistungsabfrage bzw. einem kleineren Pedalwinkel, zuzuschalten. Um dem Fahrer dennoch die Möglichkeit zu geben, das Hybridfahrzeug rein elektrisch zu betreiben, muss dem Fahrer die Möglichkeit gegeben werden, das Fahrpedal in Winkelstellungen zu bewegen, die vor einem Wegpunkt liegen, der das Zuschalten des Verbrennungsmotors bewirkt. Dazu ist vorgesehen, dass, falls der Fahrer das Fahrpedal kurz in einer Ausgangssituation hält bzw. fixiert, und der Wegpunkt zum Zuschalten des Verbrennungsmotors in Reaktion auf das Entladen der Batterie verschoben wird, das Fahrpedal ggf. zusammen mit dem Fuß des Fahrers vor einen neuen bzw. verschobenen Wegpunkt verschoben bzw. ausgelenkt wird. Durch das Verschieben des Fahrpedals wird der Fahrer in die Lage versetzt, über ein ggf. vorzunehmendes Zuschalten des Verbrennungsmotors auch bei geändertem Wegpunkt zu entscheiden. Würde der Wegpunkt zum Zuschalten des Verbrennungsmotors verstellt, ohne dass das Fahrpedal entsprechend verschoben würde, würde der Verbrennungsmotor ohne Befehl des Fahrers bzw. ohne eine zuvor an den Fahrer übermittelte Rückmeldung zugeschaltet werden, da die Lage des Wegpunkts zum Zuschalten des Verbrennungsmotors bzw. eines Wegpunkts für eine entsprechende Rückmeldung an den Fahrer auf der Bewegungsbahn des Fahrpedals quasi "unter dem Fuß des Fahrers hindurch" verschoben würde.

In einer möglichen Ausgestaltung des vorgestellten Verfahrens ist vorgesehen, dass der mindestens eine Zustand ausgewählt ist aus einem oder einer Kombination der folgenden Liste an Zuständen: kritische Leistungsabfrage, Zuschalten eines Antriebsaggregats oder Überschreiten einer vorgegebenen Geschwindigkeit sowie jeder weitere Zustand beim Betrieb einer Vorrichtung, der mittels eines Kraftstellers zu steuern ist.

In noch einer weiteren möglichen Ausgestaltung des vorgestellten Verfahrens ist vorgesehen, dass eine Funktion zum Bereitstellen der Rückmeldung an den Nutzer an dem geänderten Wegpunkt erst aktiviert wird nachdem der Kraftsteller an den Sollpunkt verschoben wurde.

Um ein Bereitstellen der Rückmeldung bereits beim Passieren des geänderten Wegpunkts während einer Rückstellbewegung, d. h. einer durch den Aktuator vermittelten Verschiebebewegung des Kraftstellers zu vermeiden, ist gemäß der Erfindung vorgesehen, dass eine Funktion zum Bereitstellen der Rückmeldung an den Nutzer erst dann aktiviert wird, wenn der Kraftsteller an dem Sollwegpunkt, d. h. an einem jeweiligen geänderten und vor dem Punkt zum Bereitstellen der Rückmeldung bzgl. des geänderten Betriebszustands, angekommen ist.

In einer weiteren möglichen Ausgestaltung des vorgestellten Verfahrens ist vorgesehen, dass der Kraftsteller zu dem Sollwegpunkt mittels einer Bewegungsfunktion verschoben wird, die den mindestens einen Aktuator derart ansteuert, dass die Bewegung des Kraftstellers zu dem Sollwegpunkt von dem Nutzer nicht bemerkt wird.

Um einem jeweiligen Nutzer einer jeweiligen Vorrichtung eine intuitive Bedienung der Vorrichtung zu ermöglichen, ist vorgesehen, dass das vorgestellte Verfahren, d. h. insbesondere das Verschieben des Kraftstellers auf den Sollwegpunkt, derart abläuft, dass der Nutzer keine Kenntnis von entsprechenden Verstellvorgängen erlangt und entsprechend lediglich eine Rückmeldung über einen ggf. sich ändernden bzw. geänderten Zustand der Vorrichtung an einem vorgegebenen Wegpunkt auf einer Bewegungsbahn eines jeweiligen Kraftstellers erhält.

Um jeweilige Verstellvorgänge des Kraftstellers bzw. eines jeweiligen Aktuators unbemerkt von dem Nutzer ablaufen zu lassen, ist denkbar, dass die Verstellvorgänge mittels einer in Bezug auf eine Wahrnehmung des Nutzers optimierten Bewegungsfunktion ablaufen.

In einer möglichen Ausgestaltung des vorgestellten Verfahrens ist vorgesehen, dass die Bewegungsfunktion eine Rampenfunktion ist.

Eine mögliche Ausgestaltung einer Bewegungsfunktion, die in Bezug auf eine Wahrnehmung eines Nutzers optimiert ist, ist eine Rampenfunktion, bei der ein jeweiliger Aktuator zum Verschieben des Kraftstellers entlang seiner Bewegungsbahn zunächst mit einem geringen Strom angesteuert wird, so dass der Aktuator eine entsprechend geringe Kraft erzeugt, die von dem Nutzer nicht bemerkt wird. Durch kontinuierliches Erhöhen des Stroms bzw. der von dem Aktuator erzeugten Kraft erreicht der Aktuator an einem bestimmten Punkt genau die Kraft, mit der der Nutzer auf den Kraftsteller einwirkt und neutralisiert die von dem Nutzer aufgebrachte Kraft mit einem entsprechenden Gegendruck. Wird die von dem Aktuator an diesem Punkt aufgebrachte Kraft nun langsam bzw. in kleinen Schritten weiter gesteigert, verfährt der Kraftsteller zusammen mit dem Fuß des Nutzers sanft und unmerklich zu dem Sollwegpunkt. Am Sollwegpunkt angekommen wird die von dem Aktuator aufgebrachte Kraft bzw. der entsprechende Strom reduziert und der Nutzer kann den Kraftsteller an dem Sollwegpunkt wie gewohnt verwenden. Zum Neutralisieren der durch den Nutzer aufgebrachten Kraft kann der Aktuator langsam steigernd bestromt und/oder ein Kraftsensor am Kraftsteller eingesetzt werden, der eine von dem Aktuator aufzubringende Kraft vorgibt.

In einer weiteren möglichen Ausgestaltung des vorgestellten Verfahrens ist vorgesehen, dass die Bewegungsfunktion den Aktuator derart ansteuert, dass der Kraftsteller etappenweise zu dem Sollwegpunkt verschoben wird.

Es ist ebenfalls denkbar, dass der Aktuator zum Verschieben des Kraftstellers etappenweise angesteuert wird, so dass bspw. in Abhängigkeit eines bestimmten Ereignisses, wie bspw. einer Veränderung der von dem Nutzer auf den Kraftsteller aufgebrachten Kraft, eine Vielzahl von kleinen und schnellen Bewegungen des Kraftstellers vorgenommen werden, um den Kraftsteller an den Sollwegpunkt zu verschieben.

In einer weiteren möglichen Ausgestaltung des vorgestellten Verfahrens ist vorgesehen, dass die Rückmeldung an den Nutzer ausgewählt ist aus der folgenden Liste an Rückmeldungen: Vibrationsmuster, veränderter Druckpunkt oder veränderter Druckwiderstand.

Ferner betrifft die vorliegende Erfindung eine Steuervorrichtung für eine Vorrichtung, mit einem Kraftsteller, einem Steuergerät und mindestens einem Aktuator, wobei das Steuergerät dazu konfiguriert ist, mittels des mindestens einen Aktuators dem Nutzer an einem vorgegebenen Wegpunkt des Kraftstellers eine Rückmeldung über mindestens einen Zustand der Vorrichtung an dem Kraftsteller bereitzustellen und wobei das Steuergerät weiterhin dazu konfiguriert ist, den mindestens einen Aktuator derart anzusteuern, dass mittels des mindestens einen Aktuators, bei einer Änderung des vorgegebenen Wegpunkts in einen in Auslenkungsrichtung des Kraftstellers vor dem vorgegebenen Wegpunkt liegenden geänderten Wegpunkt, der Kraftsteller an einen Sollwegpunkt zu verschieben ist, der in Auslenkungsrichtung des Kraftstellers vor dem geänderten Wegpunkt liegt, so dass dem Nutzer bei einem Verschieben des Kraftstellers in Auslenkungsrichtung die Rückmeldung über den mindestens einen Zustand für den Fall, dass der Kraftsteller auf seinem Weg in Auslenkungsrichtung den geänderten Wegpunkt erreicht, an dem geänderten Wegpunkt bereitzustellen ist.

Die vorgestellte Steuervorrichtung dient insbesondere zur Ausführung des vorgestellten Verfahrens.

In einer möglichen Ausgestaltung der vorgestellten Steuervorrichtung ist vorgesehen, dass die Vorrichtung eine Vorrichtung aus der folgenden Liste an Vorrichtungen ist: Fahrzeug, Flugzeug, Wassergefährt, Transportmittel, Werkzeug, sowie jede weitere technische Einrichtung mit mehreren Betriebszuständen.

Ferner betrifft die vorliegende Erfindung ein Fahrzeug mit einer Ausführungsform der vorgestellten Steuervorrichtung zur Ausführung des vorgestellten Verfahrens.

Es ist insbesondere vorgesehen, dass das vorgestellte Fahrzeug ein Hybridfahrzeug ist, bei dem die erfindungsgemäß vorgesehene Rückmeldung ein Rückmelden eines Zuschaltens eines Verbrennungsmotors zu einem elektrischen Antrieb ist.

Weitere Vorteile und Ausgestaltungen der Erfindung ergeben sich aus der Beschreibung und den beiliegenden Zeichnungen.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt eine schematische Darstellung eines Verschiebens eines Kraftstellers von einem vorgegebenen Wegpunkt zu einem Sollwegpunkt gemäß einer möglichen Ausgestaltung des vorgestellten Verfahrens.
Figur 2a zeigt einen Verlauf einer von einem Aktuator aufgebrachten Kraft zum Verschieben eines Kraftstellers gemäß einer möglichen Ausgestaltung des vorgestellten Verfahrens.
Figur 2b zeigt einen Bewegungsverlauf eines Kraftstellers sowie eines auf dem Kraftsteller angeordneten Fußes eines Nutzers während der Aktuator mit einer Kraft gemäß Figur 2a auf den Kraftsteller einwirkt.

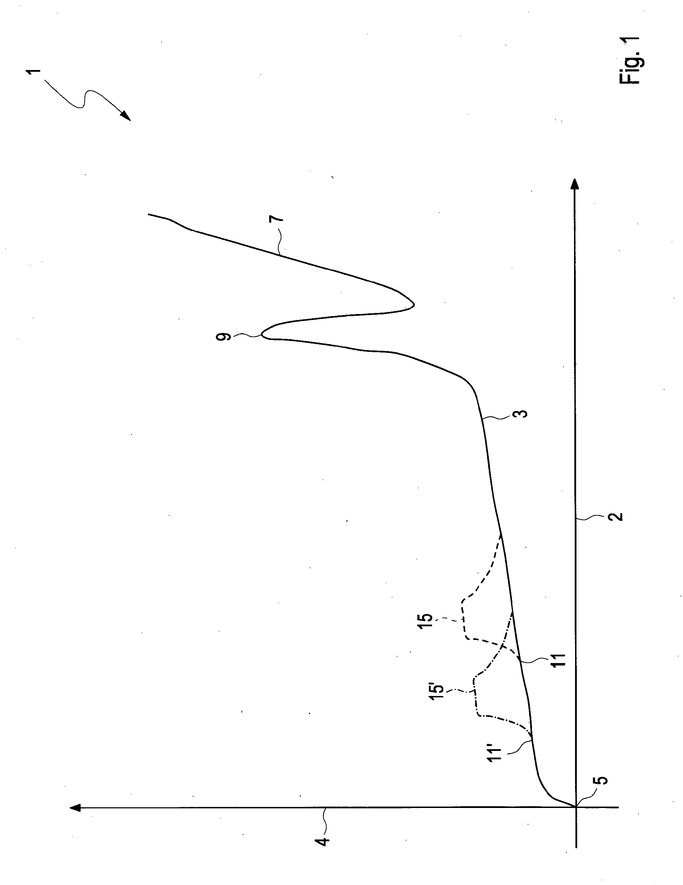

In Figur 1 ist ein Diagramm 1 dargestellt, bei dem auf der Abszisse 2 ein Weg in [cm] und auf der Ordinate 4 eine Kraftachse in [N] aufgetragen ist. Ein Verlauf 3 zeigt einen Kraftaufwand, den ein Fahrer bei einem Bewegen eines Fahrpedals eines Fahrzeugs entlang einer Bewegungsbahn zu leisten hat, die von einer Ruhestellung 5 zu einer Volllast- bzw. Kickdown-Position 7, in der eine finale Getriebestufe geschalten wird, führt. Das Erreichen der Volllastposition wird dem Fahrer über einen Kickdownpunkt 9 rückgemeldet.

Um dem Fahrer eine Rückmeldung über einen Betriebszustand des Fahrzeugs zu geben, an dem ein Verbrennungsmotor des Fahrzeugs zusätzlich zu einem elektrischen Antrieb zugeschalten wird, ist vorgesehen, dass dem Fahrpedal auf seinem Weg entlang des Verlaufs 3 an bzw. kurz vor einem Wegpunkt 11 ein Aktuator mit einer Kraft, die einen Druckpunkt definiert, entgegenwirkt, wie durch einen Verlauf 15 angedeutet. Die von dem Aktuator aufgebrachte Kraft bewirkt einen Gegendruck zu einer von dem Fahrer aufgebrachten Kraft zum Verschieben des Fahrpedals entlang des Verlaufs 3, so dass der Fahrer den Wegpunkt 11 wahrnimmt und entscheiden kann, ob er diesen mit dem Fahrpedal übertritt und den Verbrennungsmotor zuschaltet oder ob er das Fahrpedal lediglich bis zu dem Druckpunkt an bzw. kurz vor dem Wegpunkt 11 bewegt und lediglich mittels des elektrischen Antriebs fährt.

Während eines Betriebs des Fahrzeugs kann es vorkommen, dass sich bspw. ein Ladezustand einer Batterie des Fahrzeugs derart ändert, dass der Verbrennungsmotor bereits bei einem Betriebszustand des Fahrzeugs zugeschalten werden muss, bei dem eine Leistungsanforderung abgerufen wird, die einer Position des Fahrpedals entspricht, die vor dem Wegpunkt 11, bspw. an einem geänderten Wegpunkt 11' liegt. Entsprechend ist es erforderlich, dass sich auch der Punkt an dem dem Fahrer der Druckpunkt zur Rückmeldung des Zuschaltens des Verbrennungsmotors mittels des Aktuators bereitgestellt wird, ändert bzw. dass der Druckpunkt verschoben wird, wie durch einen verschobenen Verlauf 15' angedeutet. Andernfalls würde das Zuschalten des Verbrennungsmotors nicht mehr mit dem bereitgestellten Druckpunkt zusammenfallen und der Fahrer hätte keine Kontrolle über das Zuschalten des Verbrennungsmotors.

Beispielsweise würde für den Fall, dass der Fahrer das Fahrpedal kurz vor dem Wegpunkt 11 hält, um ein Zuschalten des Verbrennungsmotors zu verhindern, und der Betriebszustand des Fahrzeugs ein Verschieben des Druckpunkts von dem Wegpunkt 11 zu dem geänderten Wegpunkt 11' erfordert, dem Fahrer der Druckpunkt bzw. der Wegpunkt zum Aktivieren des Verbrennungsmotors "unter dem Fuß hindurch verschoben" werden und der Verbrennungsmotor würde ohne Einwilligung des Fahrers zugeschaltet werden. Um ein derartiges Szenario zu verhindern, ist erfindungsgemäß vorgesehen, das Fahrpedal bei einem Verschieben des Druckpunkts ebenfalls zu verschieben, so dass der Druckpunkt zur Rückmeldung des Zuschaltens des Verbrennungsmotors an den Fahrer auf bzw. kurz vor dem geänderten Wegpunkt 11' liegt.

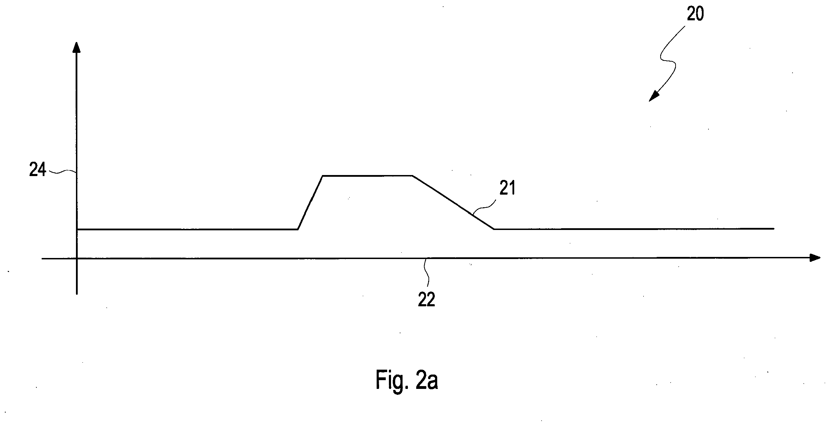

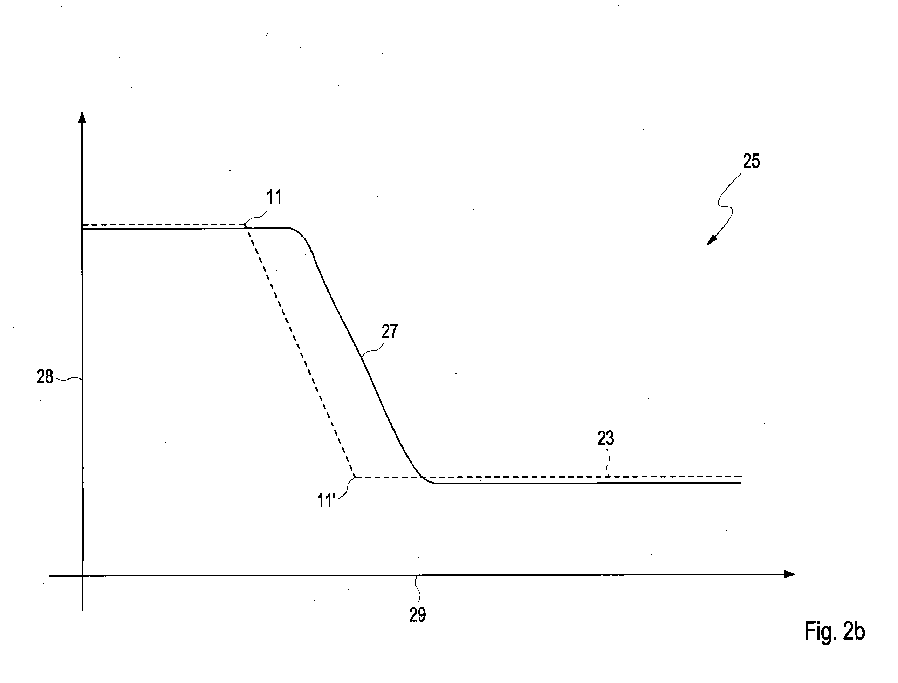

In Figur 2a ist ein Kraftverlauf 21 eines Aktuators zum Verschieben des Fahrpedals von dem Wegpunkt 11 zu dem Wegpunkt 11' gemäß Figur 1 in einem Diagramm 20 dargestellt, das sich über die Achsen Kraft in [N] auf der Ordinate 24 und Zeit in [s] auf der Abszisse 22 aufspannt. In Figur 2b ist ein Bewegungsverlauf des Fahrpedals von dem Wegpunkt 11 zu dem Wegpunkt 11' in Abhängigkeit des in Figur 2a dargestellten Kraftverlaufs dargestellt.

Zum Verschieben des Fahrpedals von dem Wegpunkt 11 zu dem Wegpunkt 11' wird ein Aktuator, wie bspw. ein linearer Hubmagnet, solange bestromt, bis das Fahrpedal von dem Wegpunkt 11 zu dem Wegpunkt 11' verschoben ist. Dabei ist vorgesehen, dass der Aktuator gemäß einer Bewegungsfunktion bestromt wird, die bewirkt, dass der Fahrer den Verschiebevorgang des Fahrpedals nicht bemerkt. Der in Figur 2a dargestellte Kraftverlauf 21 zeigt, wie die von dem Aktuator aufgebrachte Kraft langsam gesteigert wird, bis sie eine von dem Nutzer zum Halten des Fahrpedals an seiner aktuellen Position aufgebrachte Kraft gerade übertrifft, so dass das Fahrpedal von dem Wegpunkt 11 fort bewegt wird. Sobald das Fahrpedal in Bewegung ist, bleibt das Kraftniveau des Aktuators solange konstant bis das Fahrpedal gemäß seinem in Figur 2b dargestellten Verlauf 23 an dem geänderten Wegpunkt 11' angekommen ist.

In Figur 2b ist ein Diagramm 25 dargestellt, bei dem auf der Ordinate 28 ein Weg in [cm] und der Abszisse 29 eine Zeitachse in [s] aufgetragen ist. Ein auf dem Fahrpedal ruhender Fuß des Fahrers wird entsprechend mit dem Fahrpedal mitverschoben, wie durch einen Verlauf 27 angedeutet. Dies bedeutet, dass auch der Fuß des Fahrers von dem Wegpunkt 11 zu dem Wegpunkt 11' verschoben wird und der Fahrer die Möglichkeit erhält, den geänderten Druckpunkt mit dem Fahrpedal anzufahren.

## Patentansprüche

1. Verfahren zum Steuern einer Vorrichtung, bei dem ein Steuerbefehl zum Steuern der Vorrichtung über einen von einem Nutzer betätigten Kraftsteller erzeugt wird, wobei ein Steuergerät der Vorrichtung mindestens einen Aktuator derart steuert, dass der mindestens eine Aktuator dem Nutzer an einem vorgegebenen Wegpunkt des Kraftstellers eine Rückmeldung über mindestens einen Zustand der Vorrichtung an dem Kraftsteller bereitstellt und wobei das Steuergerät den mindestens einen Aktuator weiterhin derart steuert, dass der mindestens eine Aktuator, bei einer Änderung des vorgegebenen Wegpunkts des Kraftstellers in einen in Auslenkungsrichtung des Kraftstellers vor dem vorgegebenen Wegpunkt liegenden geänderten Wegpunkt, den Kraftsteller an einen Sollwegpunkt verschiebt, der in Auslenkungsrichtung des Kraftstellers vor dem geänderten Wegpunkt liegt, so dass dem Nutzer bei einem Verschieben des Kraftstellers in Auslenkungsrichtung die Rückmeldung über den mindestens einen Zustand an dem geänderten Wegpunkt bereitgestellt wird, wenn der Kraftsteller auf seinem Weg in Auslenkungsrichtung den geänderten Wegpunkt erreicht, **dadurch gekennzeichnet, dass** eine Funktion zum Bereitstellen der Rückmeldung an den Nutzer an dem geänderten Wegpunkt erst aktiviert wird, nachdem der Kraftsteller an den Sollpunkt verschoben wurde.

2. Verfahren nach Anspruch 1, wobei der Kraftsteller beim Verschieben zu dem Sollwegpunkt zusammen mit einem Fuß des Nutzers verschoben wird.

3. Verfahren nach Anspruch 1 oder 2, wobei der mindestens eine Zustand ausgewählt ist aus einem oder einer Kombination der folgenden Liste an Zuständen: kritische Leistungsabfrage, Zuschalten eines Antriebsaggregats oder Überschreiten einer vorgegebenen Geschwindigkeit.

4. Verfahren nach einem der voranstehenden Ansprüche, wobei der Kraftsteller zu dem Sollwegpunkt mittels einer Bewegungsfunktion verschoben wird, die den mindestens einen Aktuator derart ansteuert, dass die Bewegung des Kraftstellers zu dem Sollwegpunkt von dem Nutzer nicht bemerkt wird.

5. Verfahren nach Anspruch 4, wobei die Bewegungsfunktion eine Rampenfunktion ist.

6. Verfahren nach Anspruch 4 oder 5, wobei die Bewegungsfunktion den Aktuator derart ansteuert, dass der Kraftsteller etappenweise zu dem Sollwegpunkt verschoben wird.

7. Verfahren nach einem der voranstehenden Ansprüche, wobei die Rückmeldung an den Nutzer ausgewählt ist aus der folgenden Liste an Rückmeldungen: Vibrationsmuster, veränderter Druckpunkt oder veränderter Druckwiderstand.

8. Steuervorrichtung für eine Vorrichtung, mit einem Kraftsteller, einem Steuergerät und mindestens einem Aktuator, wobei das Steuergerät dazu konfiguriert ist, mittels des mindestens einen Aktuators dem Nutzer an einem vorgegebenen Wegpunkt des Kraftstellers eine Rückmeldung über mindestens einen Zustand der Vorrichtung an dem Kraftsteller bereitzustellen und wobei das Steuergerät weiterhin dazu konfiguriert ist, den mindestens einen Aktuator derart anzusteuern, dass mittels des mindestens einen Aktuators, bei einer Änderung des vorgegebenen Wegpunkts in einen in Auslenkungsrichtung des Kraftstellers vor dem vorgegebenen Wegpunkt liegenden geänderten Wegpunkt, den Kraftsteller an einen Sollwegpunkt zu verschieben ist, der in Auslenkungsrichtung des Kraftstellers vor dem geänderten Wegpunkt liegt, so dass dem Nutzer bei einem Verschieben des Kraftstellers in Auslenkungsrichtung die Rückmeldung über den mindestens einen Zustand, für den Fall, dass der Kraftsteller auf seinem Weg in Auslenkungsrichtung den geänderten Wegpunkt erreicht, an dem geänderten Wegpunkt bereitzustellen ist, **dadurch gekennzeichnet, dass** eine Funktion zum Bereitstellen der Rückmeldung an den Nutzer an dem geänderten Wegpunkt erst aktiviert wird, nachdem der Kraftsteller an den Sollpunkt verschoben wurde.

9. Steuervorrichtung nach Anspruch 8, wobei der mindestens eine Aktuator ein linearer Hubmagnet ist.

10. Steuervorrichtung nach Anspruch 8 oder 9, wobei die Vorrichtung eine Vorrichtung aus der folgenden Liste an Vorrichtungen ist: Fahrzeug, Flugzeug, Wassergefährt, Transportmittel, Werkzeug, sowie jede weitere technische Einrichtung mit mehreren Betriebszuständen.

11. Steuervorrichtung nach einem der Ansprüche 8 bis 10, wobei der Kraftsteller ein Pedal ist.

12. Fahrzeug mit einer Steuervorrichtung nach einem der Ansprüche 8 bis 11 zur Durchführung eines Verfahrens nach einem der Ansprüche 1 bis 7.

13. Fahrzeug nach Anspruch 12, wobei das Fahrzeug ein Hybridfahrzeug mit mindestens zwei Antrieben ist.

## Claims

1. Method for controlling a device, in which a control command for controlling the device is generated via a power actuator operated by a user, wherein a control unit of the device controls at least one actuator in such a way that at a predetermined travel point of the power actuator the at least one actuator provides the user with feedback about at least one condition of the device at the power actuator, and wherein the control unit further controls the at least one actuator in such a way that the at least one actuator, in the event of a change in the predetermined travel point of the power actuator to a changed travel point lying before the predetermined travel point in the deflection direction of the power actuator, displaces the power actuator to a set travel point lying before the changed travel point in the deflection direction of the power actuator, so that, when the power actuator is displaced in the deflection direction, the feedback about the at least one condition is provided to the user at the changed travel point when the power actuator reaches the changed travel point on its travel in the deflection direction, **characterised in that** a function for providing the feedback to the user at the changed travel point is activated only after the power actuator has been displaced to the set point.

2. Method according to claim 1, wherein the power actuator is displaced together with a foot of the user during displacement to the set travel point.

3. Method according to claim 1 or 2, wherein the at least one condition is selected from one or a combination of the following list of conditions: critical power request, engagement of a drive unit or exceeding of a predetermined speed.

4. Method according to any one of the preceding claims, wherein the power actuator is displaced to the set travel point by means of a movement function that controls the at least one actuator in such a way that the movement of the power actuator to the set travel point is not noticed by the user.

5. Method according to claim 4, wherein the movement function is a ramp function.

6. Method according to claim 4 or 5, wherein the movement function controls the actuator in such a way that the power actuator is displaced to the set travel point in stages.

7. Method according to any one of the preceding claims, wherein the feedback to the user is selected from the following list of feedbacks: vibration pattern, altered pressure point or altered pressure resistance.

8. Control device for a device, comprising a power actuator, a control unit and at least one actuator, wherein the control unit is configured to provide to the user, by means of the at least one actuator, at a predetermined travel point of the power actuator feedback about at least one condition of the device at the power actuator, and wherein the control unit is further configured to control the at least one actuator in such a way that, by means of the at least one actuator, when the predetermined travel point is changed to a changed travel point lying before the predetermined travel point in the deflection direction of the power actuator, the power actuator is to be displaced to a set travel point lying before the changed travel point in the deflection direction of the power actuator, so that, when the power actuator is displaced in the deflection direction, the feedback about the at least one condition, in the event that the power actuator reaches the changed travel point on its travel in the deflection direction, is to be provided to the user at the changed travel point, **characterised in that** a function for providing the feedback to the user at the changed travel point is activated only after the power actuator has been displaced to the set point.

9. Control device according to claim 8, wherein the at least one actuator is a linear solenoid.

10. Control device according to claim 8 or 9, wherein the device is one of the following list of devices: vehicle, aircraft, watercraft, transport means, tool, and any other technical equipment with multiple operating conditions.

11. Control device according to any one of claims 8 to 10, wherein the power actuator is a pedal.

12. Vehicle comprising a control device according to any one of claims 8 to 11 for carrying out a method according to any one of claims 1 to 7.

13. Vehicle according to claim 12, wherein the vehicle is a hybrid vehicle with at least two drives.

## Revendications

1. Procédé de commande d'un dispositif, pour lequel un ordre de commande est généré pour la commande du dispositif par le biais d'un positionneur de force actionné par un utilisateur, dans lequel un appareil de commande du dispositif commande au moins un actionneur de telle manière que l'au moins un actionneur fournisse à l'utilisateur au niveau d'un point de cheminement prédéfini du positionneur de force un retour sur au moins un état du dispositif au niveau du positionneur de force et dans lequel l'appareil de commande commande en outre l'au moins un actionneur de telle manière que l'au moins un actionneur, lors d'une modification du point de cheminement prédéfini du positionneur de force dans un point de cheminement modifié dans le sens de déviation du positionneur de force avant le point de cheminement prédéfini, déplace le positionneur de force au niveau d'un point de cheminement de consigne qui se trouve dans le sens de déviation du positionneur de force avant le point de cheminement modifié de sorte qu'à l'utilisateur soit fourni lors d'un déplacement du positionneur de force dans le sens de déviation le retour sur l'au moins un état au niveau du point de cheminement modifié, lorsque le positionneur de force atteint sur son chemin dans le sens de déviation le point de cheminement modifié, **caractérisé en ce qu'**une fonction n'est activée pour la fourniture du retour à l'utilisateur au niveau du point de cheminement modifié qu'après que le positionneur de force a été déplacé au niveau du point de consigne.

2. Procédé selon la revendication 1, dans lequel le positionneur de force est déplacé lors du déplacement vers le point de cheminement de consigne conjointement avec un pied de l'utilisateur.

3. Procédé selon la revendication 1 ou 2, dans lequel l'au moins un état est sélectionné à partir d'un ou d'une combinaison de la liste suivante d'états : demande de puissance critique, arrêt d'un groupe d'entraînement ou dépassement d'une vitesse prescrite.

4. Procédé selon l'une des revendications précédentes, dans lequel le positionneur de force est déplacé vers le point de cheminement de consigne au moyen d'une fonction de déplacement qui commande l'au moins un actionneur de telle manière que le déplacement du positionneur de force vers le point de cheminement de consigne ne soit pas remarqué par l'utilisateur.

5. Procédé selon la revendication 4, dans lequel la fonction de déplacement est une fonction de rampe.

6. Procédé selon la revendication 4 ou 5, dans lequel la fonction de déplacement commande l'actionneur de telle manière que le positionneur de force soit déplacé par étapes vers le point de cheminement de consigne.

7. Procédé selon l'une des revendications précédentes, dans lequel le retour à l'utilisateur est sélectionné à partir de la liste suivante de retours : modèle de vibration, point de pression modifié ou résistance à la pression modifiée.

8. Dispositif de commande pour un dispositif, avec un positionneur de force, un appareil de commande et au moins un actionneur, dans lequel l'appareil de commande est configuré afin de fournir au moyen d'au moins un actionneur à l'utilisateur au niveau d'un point de cheminement prédéfini du positionneur de force un retour sur au moins un état du dispositif au niveau du positionneur de force et dans lequel l'appareil de commande est en outre configuré afin de commander l'au moins un actionneur de telle manière qu'au moyen d'au moins un actionneur, lors d'une modification du point de cheminement prédéfini dans un point de cheminement modifié se trouvant dans le sens de déviation du positionneur de force avant le point de cheminement prédéfini, le positionneur de force soit à déplacer au niveau d'un point de cheminement de consigne qui se trouve dans le sens de déviation du positionneur de force avant le point de cheminement modifié de sorte qu'à l'utilisateur lors d'un déplacement du positionneur de force dans le sens de déviation, le retour sur l'au moins un état, pour le cas où le positionneur de force atteint sur son chemin dans le sens de déviation le point de cheminement modifié, soit à fournir au niveau du point de cheminement modifié, **caractérisé en ce qu'**une fonction n'est activée pour la fourniture du retour à l'utilisateur au niveau du point de cheminement modifié qu'après que le positionneur de force a été déplacé au niveau du point de consigne.

9. Dispositif de commande selon la revendication 8, dans lequel l'au moins un actionneur est un aimant de levage linéaire.

10. Dispositif de commande selon la revendication 8 ou 9, dans lequel le dispositif est un dispositif à partir de la liste suivante de dispositifs : véhicule, avion, véhicule aquatique, moyen de transport, outil, ainsi que chaque autre système technique avec plusieurs états de fonctionnement.

11. Dispositif de commande selon l'une des revendications 8 à 10, dans lequel le positionneur de force est une pédale.

12. Véhicule avec un dispositif de commande selon l'une des revendications 8 à 11 pour la réalisation d'un procédé selon l'une des revendications 1 à 7.

13. Véhicule selon la revendication 12, dans lequel le véhicule est un véhicule hybride avec au moins deux entraînements.
